# EUROPÄISCHE PATENTANMELDUNG

(11) **EP 0 600 159 A1**
(43) Veröffentlichungstag der Anmeldung: **08.06.1994**
(21) Anmeldenummer: 93112838.3
(22) Anmeldetag: 11.08.1993
(51) Int. Cl.: B01D 15/00, C02F 1/42, C25D 21/16, C23F 1/46, C23G 1/36

(54) **Retardationsanlage mit Druckluft-Membranpumpe und Hubzähleinrichtung**

(30) Priorität: 26.11.1992 DE 4239748
(71) Anmelder: GÜTLING GMBH, D-70736 Fellbach (DE)
(72) Erfinder: Schwering, Hans-Ulrich, Dr., 71229 Leonberg (DE); Schaich, Roland, 71397 Leutenbach (DE)
(74) Vertreter: KOHLER SCHMID + PARTNER

(57) **Zusammenfassung**

Bei einer Retardationsanlage zur Säure-Salz-Trennung mit einem Behälter (2), der säureaufnehmendes Adsorbermaterial, insbesondere Adsorberharz enthält und eine Zuleitung (5, 12) für wässrige Säure-Salz-Lösung, beispielsweise aus einem Eloxalbad, eine weitere Zuleitung (7, 12) für eine Regenerierlösung zum Regenerieren des Adsorbermaterials, insbesondere vollentsalztes (VE) Wasser, im Gegenstrom zur Säure-Salz-Lösung, sowie eine Ableitung (9, 8) für behandelte Säure-Salz-Lösung, die das Adsorbermaterial pasiert hat, aufweist und mit mindestens einer Pumpe zur Förderung der Säure-Salz-Lösung und/oder der Regenerierlösung ist genau eine Pumpe vorgesehen, die als Druckluft-Membranpumpe (1) ausgeführt ist und eine Einrichtung (10) zur Hubzählung, sowie eine Einrichtung (11) zur Steuerung der Volumenströme von Säure-Salz-Lösung bzw. Regenerierlösung aufgrund der Hubzahl der Druckluft-Membranpumpe (1) aufweist. Durch die Hubmessungen kann eine genaue Mengenzumessung der kritischen Flüssigkeitsmengen bis zu einem Säuredurchbruch bzw. einer Verwässerung des Eloxalbades aufgrund der ihm beim Regenerieren des Adsorberharzes zugeführten Flüssigkeit erfolgen.

## Beschreibung

Die Erfindung betrifft eine Retardationsanlage zur Säure-Salz-Trennung mit einem Behälter, der säureaufnehmendes Adsorbermaterial, insbesondere Adsorberharz enthält, und eine Zuleitung für wässrige Säure-Salz-Lösung, beispielsweise aus einem Eloxalbad, eine weitere Zuleitung für eine Regenerierlösung zum Regenerieren des Adsorbermaterials, insbesondere vollentsalztes (VE) Wasser, im Gegenstrom zur Säure-Salz-Lösung, sowie eine Ableitung für behandelte Säure-Salz-Lösung, die das Adsorbermaterial passiert hat, aufweist, und mit mindestens einer Pumpe zur Förderung der Säure-Salz-Lösung und/oder der Regenerierlösung.

Eine solche Retardationsanlage ist beispielsweise bekannt aus L. Hartinger, Handbuch der Abwasser- und Recyclingtechnik, Carl Hanser Verlag München Wien, 1991, Seiten 452 ff.

Derartige Retardationsanlagen zur Trennung von Säure-Salz-Lösungen werden beispielsweise großtechnisch beim Recycling von Eloxalbädern eingesetzt. Dabei wird die Säure-Salz-Lösung (in der Regel eine wässrige Lösung aus Schwefelsäure und Aluminiumsulfat) im Aufstrom in einen Behälter mit Kügelchen aus Adsorberharz gepumpt, welche bis zu einer gewissen Sättigungsgrenze an ihrer Oberfläche die Säure aus der Säure-Salz-Lösung adsorbieren. Das oben aus dem Behälter abgeleitete Abwasser ist dann im wesentlichen von den Säureanteilen befreit.

Sobald jedoch die Sättigungsgrenze der Harz-Kügelchen erreicht ist, erfolgt ein sogenannter Säuredurchbruch im Ablauf aus dem Behälter. Dies bedeutet, daß nunmehr aus dem Harzbehälter nicht oder nur unwesentlich entsäuerte Säure-Salz-Lösung vom Eloxalbad austritt. Um einen solchen Säuredurchbruch zu vermeiden, könnte nun ständig die Säurekonzentration der aus dem Harzbehälter abfließenden Flüssigkeit gemessen werden, damit vor Erreichen eines kritischen Wertes die Zufuhr von Säure-Salz-Lösung in den Harzbehälter gestoppt werden kann. Dieses Verfahren ist jedoch aufwendig und umständlich.

Üblicherweise wird daher bei einer Retardationsanlage vor Beginn des Normalbetriebs derjenige Volumenstrom an Säure-Salz-Lösung durch den Behälter mit frisch geschärftem Adsorberharz ermittelt, bei dessen Erreichen das Adsorberharz mit Säure gesättigt ist und bei dessen Überschreiten folglich ein Säuredurchbruch erfolgen würde.

Durch genaue Zumessung dieser empirisch ermittelten Volumenmenge an Säure-Salz-Lösung in das frisch geschärfte Adsorberharz wird von da an ohne weitere Säuremessungen des Abwassers aus dem Harzbehälter das Adsorberharz gerade bis kurz vor dem Sättigungspunkt mit Säure-Salz-Lösung beschickt. Danach wird die Zufuhr an Säure-Salz-Lösung in den Harzbehälter gestoppt und im Abstrom, also in Gegenrichtung zu der im Harzbehälter aufströmenden Säure-Salz-Lösung eine Regenerierlösung, im Anwendungsfall bei Eloxalbädern in der Regel voll-entsalztes Wasser oder Frischwasser von oben in den Harzbehälter eingeleitet. Aufgrund des Konzentrationsgradienten nimmt die Regenerierlösung die in den Adsorberharzkügelchen gespeicherte Säure auf und befördert sie nach dem Ablaufen aus dem Harzbehälter in das Eloxalbad zurück. Nach dem Durchsatz eines gewissen Regenerierlösungs-Volumenstromes durch das Adsorberharz ist dieses im wesentlichen von Säure befreit und neu geschärft.

Würde nun ungehindert weitere Regenierlösung im Abstrom durch den Harzbehälter in das Eloxalbad abgeleitet werden, so würde das Eloxalbad nunmehr durch die Zufuhr von säurearmem oder gar säurefreiem Wasser stetig verdünnt werden. Daher wird ebenso wie zur Verhinderung des Säuredurchbruchs bei der Retardationsanlage auch die Volumenmenge an Regenerierlösung ermittelt, ab der nicht mehr genügend Säure aus dem Adsorberharz gelöst wird. Bei Erreichen dieser zweiten Volumenmenge wird dann der Regenerationsvorgang gestoppt und somit eine störende Verdünnung des Eloxalbades verhindert.

Sowohl im Auf- als auch im Abstrom müssen die beiden empirisch ermittelten Volumenmengen an Säure-Salz-Lösung bzw. Regenerierlösung, die dem Adsorberharz zugeführt werden, jeweils genau abgemessen und eingehalten werden. Zu diesem Zweck sind bei bekannten Retardationsanlagen üblicherweise Zumeßbehälter vorgesehen, in denen die entsprechenden Flüssigkeitsvolumina vor Beschickung des Harzbehälters abgemessen werden. Derartige Zumeßbehälter sind jedoch platzaufwendig und teuer. Außerdem wird das Retardationsverfahren dadurch kompliziert, daß die entsprechenden Flüssigkeitsströme nicht direkt in den Harzbehälter eingeleitet werden können, sondern erst in den Zumeßbehältern abgemessen werden müssen.

Ein weiterer Nachteil der bekannten Retardationsanlagen besteht darin, daß die üblicherweise zur Förderung der Flüssigkeit verwendeten Verdrängerpumpen mit mechanischem Antrieb besondere Absicherungen gegen Heißlaufen und unzulässige Überdruckerzeugung im Leitungssystem bei Fehlfunktion von Ventilen erfordern. Im Störfall könnte sonst entweder die Pumpe selbst durch Heißlaufen undicht werden oder bei unzulässiger Überdruckerzeugung eine Leitung zum Platzen bringen. Gerade wegen der z.B. bei Eloxalbädern verwendeten konzentrierten Säuren muß ein solches Auslaufen des Systems im Störfall auf jeden Fall vermieden werden.

Aufgabe der vorliegenden Erfidnung ist es daher, eine Retardationsanlage der eingangs beschriebenen Art vorzustellen, bei der einerseits keine Durchbruchsmessung bzw. Überwachung der Zusammensetzung der ablaufenden Regenerierlösung erforderlich ist, andererseits aber keine Zumeßbehälter für die Volumenzumessung der Flüssigkeitsströme benötigt würden, und die außerdem in einem z.B. durch Druckluftausfall, Leitungsverstopfung durch Verschmutzung oder Fehlstellung von Ventilen verursachten Störfall in einer sicheren Betriebsstellung stehenbleibt, so daß auch keine besondere Absicherung der Pumpe zur Förderung der Volumenströme von nöten ist.

Diese Aufgabe wird erfindungsgemäß dadurch gelöst, daß genau eine Pumpe vorgesehen ist, daß die Pumpe als Druckluft-Membranpumpe ausgeführt ist und eine Einrichtung zur Hubzählung aufweist, und daß eine Einrichtung zur Steuerung der Volumenströme von Säure-Salz-Lösung bzw. Regenerierlösung aufgrund der Hubzahl der Druckluft-Membranpumpe vorgesehen ist.

Anstelle der üblichen Zumessung von Flüssigkeitsvolumina über Zumeßgefäße kann nunmehr die Zumessung aufgrund der Anzahl der Hübe der Druckluft-Membranpumpe erfolgen, die proportional zu einer gewissen Volumenmenge ist. Damit wird auf ebenso elegante wie preisgünstige Weise das Zumeßproblem gelöst und die erfindungsgemäße Retardationsanlage vom Platzbedarf her so kompakt wie möglich gehalten.

Ebenso wie das kritische Durchbruchsvolumen muß auch die bis zum Sättigungspunkt erforderliche Hubzahl jeweils nur einmal vor Betriebsbeginn empirisch ermittelt werden. Die bis zum Säuredurchbruch beim Harzbehälter erforderliche Volumenmenge an Säure-Salz-Lösung entspricht nunmehr einer bestimmten Hubzahl der Druckluft-Membranpumpe. Dabei wird ebenso wie bei der herkömmlichen "Zumeßlösung" über Zumeßgefäße eine im wesentlichen konstante Säurekonzentration in der zum Harzbehälter zufließenden Säure-Salz-Lösung vorausgesetzt, die jedoch bei industriellen Prozessen mit möglichst gleichbleibender Qualität wie z.B. dem oben erwähnten Eloxieren in der Regel gegeben ist.

Bei einem eventuellen Störfall bleibt die erfindungsgemäße Retardationsanlage mit der Druckluft-Membranpumpe in einer für das System sicheren Betriebsstellung stehen, da die Druckluft-Membranpumpe im Gegesatz zu einer Verdrängerpumpe mit mechanischem Antrieb nicht heißlaufen und auch keinen unzulässigen Überdruck im Leitungssystem, der zum Platzen von Leitungen führen könnte, erzeugen kann.

Bei einer Ausführungsform der erfindungsgemäßen Retardationsanlage umfaßt die Einrichtung zur Hubzählung zwei alternativ betriebene, vorzugsweise elektromechanische Zählwerke, die sich selbst nach einer vorgebbaren Hubzahl ausschalten und das jeweils andere Zählwerk einschalten. Mit Hilfe dieser beiden alternativ betriebenen Zählwerke kann im Gegentakt die jeweilige Hubzahl und somit die jeweilige Volumenmenge für in den Harzbehälter zulaufende Säure-Salz-Lösung bzw. Regenerierlösung ermittelt und zugemessen werden. Der vorgebbare Umschaltpunkt entspricht dann der jeweils eingangs einmal empirisch gemessenen Hubzahl für die jeweilige Flüssigkeitsmenge.

Bei einer bevorzugten Ausführungsform der Erfindung umfaßt die Einrichtung zur Hubzählung ein vorzugsweise elektronisches Zählwerk mit mindestens zwei abspeicherbaren diskreten Hubwerten. Damit kann die Retardationsanlage noch billiger und kompakter gestaltet werden, wobei die mindestens zwei kritischen Hubwerte beispielsweise einer Mikroprozessorsteuerung für die Volumenströme der Flüssigkeiten in der Retardationsanlage zugeführt werden.

Bei einer besonders bevorzugten Ausführungsform umfaßt die Einrichtung zur Steuerung der Volumenströme mehrere ansteuerbare Flüssigkeitsventile sowie zwei Vorsteuerventile zur Ansteuerung aller Flüssigkeitsventile. Im Gegensatz zu bisher bekannten Lösungen, bei denen jedes der Flüssigkeitsventile durch eine eigene Ansteuermimik angesteuert wird, erfolgt die Ansteuerung der Flüssigkeitsventile bei dieser Ausführungsform lediglich durch zwei Vorsteuerventile. Damit wird der apparative Aufwand bei der erfindungsgemäßen Retardationsanlage noch weiter reduziert.

In den Rahmen der Erfindung fällt auch ein Verfahren zum Betrieb einer Retardationsanlage der oben beschriebenen Art, bei dem eine Mengenzumessung der durch das Adsorbermaterial geleiteten Volumenströme von Säure-Salz-Lösung bzw. Regenerierlösung aufgrund einer Zählung der Hübe der Druckluft-Membranpumpe erfolgt.

Bevorzugt ist eine Variante des erfindungsgemäßen Verfahrens, bei der die zur Steuerung des Volumenstroms von Säure-Salz-Lösung bzw. des Volumenstroms von Regenerierlösung durch das Adsorbermaterial erforderlichen Flüssigkeitsventile durch jeweils ein einziges Vorsteuerventil angesteuert werden.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden.

Es zeigen:
Fig.1 ein Funktionsschema der erfindungsgemäßen Retardationsanlage; und
Fig.2 ein vereinfachtes Funktionsschema einer Anlage nach dem Stand der Technik.

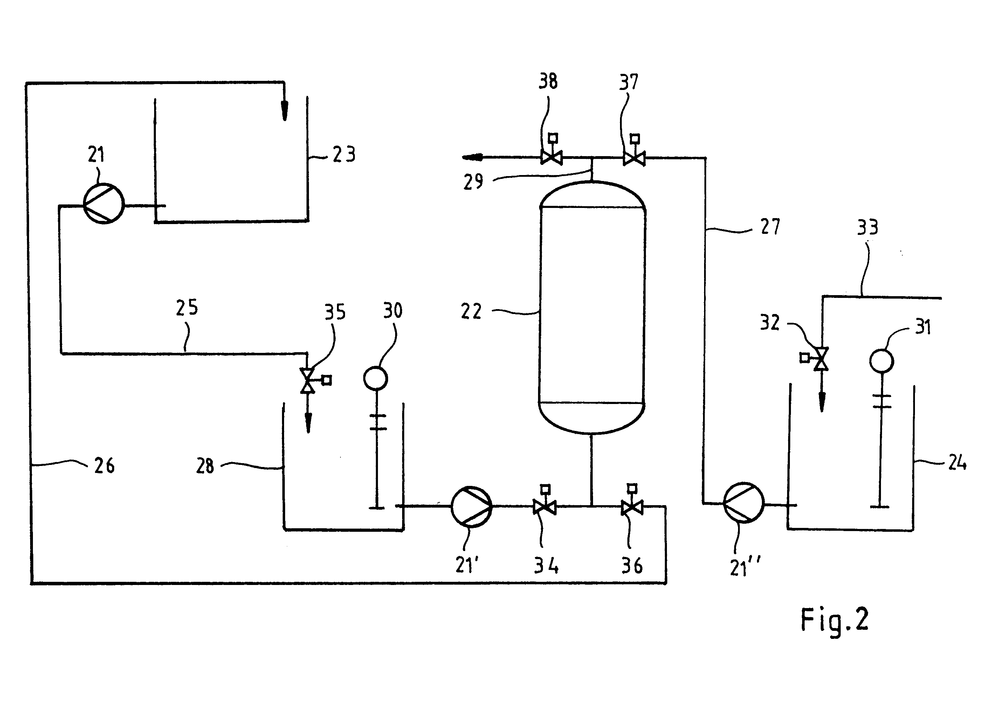

Bei der in Fig. 2 schematisch gezeigten Retardationsanlage zur Säure-Salz-Trennung nach dem Stand der Technik wird aus einem Behälter 23, beispielsweise einem Eloxalbad, über einen Leitungsabschnitt 25 und ein Ventil 35 mit Hilfe einer Pumpe 21, in der Regel einer Verdrängerpumpe mit mechanischem Antrieb, eine Säure-Salz-Lösung in einen ersten Zumeßbehälter 28 gepumpt. Dort wird mit Hilfe eines ersten Füllstandmeßgerätes 30 ein erstes kritisches Volumen an Säure-Salz-Lösung, die sogenannte Vorlage, abgemessen. Danach wird die Pumpe 21 angehalten und das Ventil 35 geschlossen.

Die Säure-Salz-Lösungsvorlage wird nun mittels einer Pumpe 21' über ein geöffnetes Ventil 34 von unten im Aufstrom in einen Harzbehälter 22 gepumpt, der ein säureaufnehmendes Adsorbermaterial, insbesondere Adsorberharz in Form von kleinen Kügelchen enthält. Das Adsorberharz im Harzbehälter 22 entnimmt der Säure-Salz-Lösung zumindest zum größten Teil die Säure, so daß die durch den Leitungsabschnitt 29 den Harzbehälter 22 verlassende Flüssigkeit säurefrei oder zumindest stark säurearm ist. Über ein geöffnetes Ventil 38 gelangt dann die entsäuerte Flüssigkeit zu einer nicht dargestellten Abwasseranlage, wo sie entsalzt oder anderweitig nachbehandelt wird. Während dieses Vorgangs sind die Ventile 36 und 37 geschlossen.

Sobald das Adsorberharz im Harzbehälter 22 mit Säure derart gesättigt ist, daß es keine oder nur noch wenig Säure aus der Säure-Salz-Lösung aufnehmen kann, wird ein Säuredurchbruch entstehen, d.h. stark säurehaltige Lösung wird über durch den Leitungsabschnitt 29 und das Ventil 38 ins Abwasser gelangen. Um dies zu verhindern wird das Volumen der Säure-Salz-Lösungsvorlage genau so bemessen, daß gerade die Sättigungsgrenze des Adsorberharzes erreicht, aber nicht überschritten wird, so daß ein Säuredurchbruch vermieden wird. Daher muß das erste kritische Volumen im ersten Zumeßbehälter 28 besonders genau abgemessen werden.

Nach Durchlauf des Vorlagevolumens durch den Harzbehälter 22 und vor Erreichen des Säuredurchbruchs wird aufgrund einer unteren Füllstandsanzeige des Füllstandsmeßgerätes 30 das Ventil 35 geschlossen und die Pumpe 21' angehalten. Unterdessen ist über eine Zuleitung 33 Regenerierlösung, in der Regel Frischwasser oder voll- entsalztes Wasser, durch ein Ventil 32 in einen zweiten Zumeßbehälter 24 gepumpt worden, wobei mit Hilfe eines zweiten Füllstandsmeßgerätes 31 wiederum ein genau festgelegtes Volumen an Regenerierlösung, die Regenerierlösungsvorlage, abgemessen wurde. Bei Erreichen der bestimmten Vorlagemenge wurde das Ventil 32 geschlossen, so daß sich nunmehr genau das zweite kritische Volumen an Regenerierlösung im Zumeßbehälter 24 befindet.

Nun wird ein Ventil 37 im Leitungsabschnitt 27 und ein Ventil 36 im Leitungsabschnitt 26 geöffnet, so daß aus dem zweiten Zumeßbehälter 24 die Vorlage an Regenerierlösung mittels einer Pumpe 21" über die Leitungsabschnitte 27 und 29 von oben im Gegenstrom zur Säure-Salz-Lösung durch den Harzbehälter 22 gepumpt wird. Die Regenerierlösung nimmt aufgrund des Gradientenunterschiedes einen Großteil der in den Adsorberkügelchen gebundenen Säure auf und transportiert dieselbe durch das geöffnete Ventil 36 und den Leitungsabschnitt 26 in den Behälter 23. Damit wird dem im Behälter 23 befindlichen Bad die vorher entzogene Säure wieder zurückgeführt.

Auch bei diesem Vorgang darf wiederum nur eine gewisse kritische Menge an Regenerierlösung durch den Harzbehälter 22 geschickt werden, da nach einer gewissen Zeit die von den Harzkügelchen adsorbierte Säure aus dem Adsorbermaterial herausgewaschen ist und durch die weitere Zufuhr von Regenerierlösung das Bad im Behälter 23 verdünnt werden würde. Dem ist wiederum durch die vorherige exakte Zumessung der Vorlagemenge an Regenerierlösung im zweiten Zumeßbehälter 24 Rechnung getragen worden, da das zweite kritische Volumen genau der experimentell ermittelten Menge an Regenerierlösung entspricht, bei deren Durchlaufen durch das zunächst mit Säure gesättigte Adsorberharz gerade noch keine störende Verdünnung des Bades im Behälter 23 bewirkt wird.

Nach Durchlauf der so bemessenen Regenerierlösungsvorlage durch den Harzbehälter 22 und vor Erreichen dieses zweiten kritischen Punktes werden daher aufgrund einer unteren Füllstandsanzeige des Füllstandsmeßgerätes 31 die Ventile 37 und 36 geschlossen, die Pumpe 21" gestoppt, die Pumpe 21' wieder angeworfen und die Ventile 35 und 38 wieder geöffnet, um die unterdessen im ersten Zumeßbehälter 28 erneut zugemessene Vorlagemenge an Säure-Salz-Lösung durch den Harzbehälter 22 zu fördern und den nächsten Entsäuerungsschritt im Betriebszyklus einzuleiten.

Dabei wird stillschweigend vorausgesetzt, daß die Säurezusammensetzung im Behälter 23 im wesentlichen konstant bleibt, was aber in der Praxis aufgrund der Notwendigkeit von gleichmäßigen Bedingungen normalerweise immer der Fall sein wird.

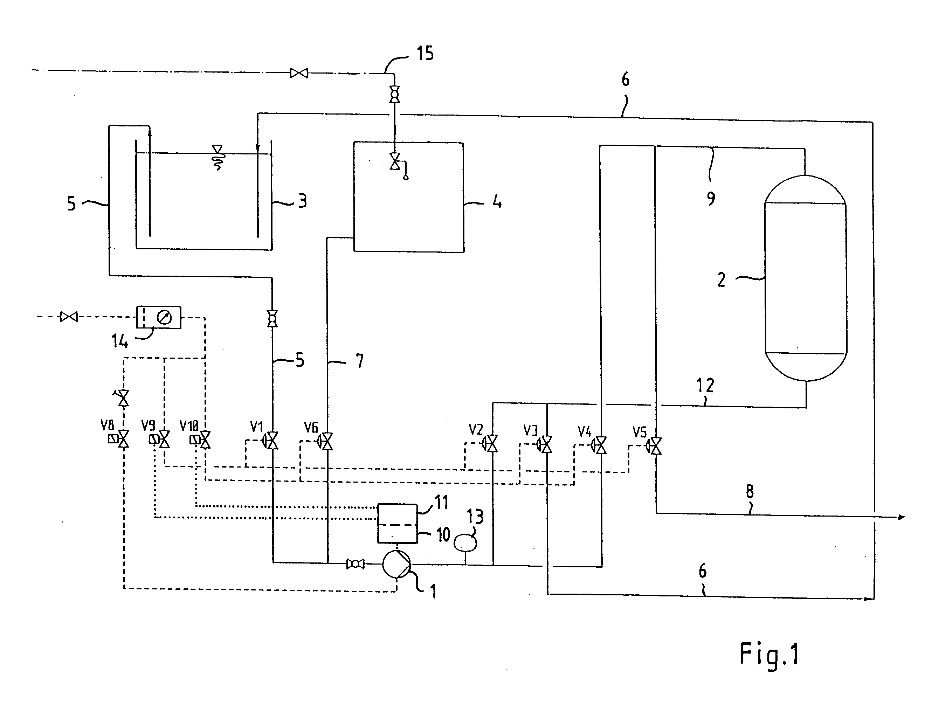

Um den zeitraubenden Vorgang der Zumessung der jeweils richtigen kritischen Menge sowie den für die Zumeßgefäße 24,28 benötigten Platz einzusparen, wird bei der erfindungsgemäßen Retardationsanlage, wie sie in Fig. 1 gezeigt ist, statt der üblichen mechanischen Verdrängerpumpen 21,21' ,21" lediglich eine einzige Druckluft-Membranpumpe 1 zur Förderung der Prozeßflüssigkeiten eingesetzt. Dabei wird die Anzahl der Hübe der Druckluft-Membranpumpe 1 mit Hilfe einer Einrichtung 10 zur Hubzählung gemessen und die Hubzahl einer gewissen Fördermenge an Flüssigkeit zugeordnet, so daß aufgrund der gemessenen Hubzahl die jeweils kritische Flüssigkeitsmenge ziemlich exakt eingehalten werden kann.

Über eine mit der Einrichtung 10 zur Hubzählung verbundene Einrichtung 11 werden bei dem in Fig. 1 gezeigten Ausführungsbeispiel die beiden Vorsteuerventile V9 und V10 mit Hilfe von gepunktet dargestellten Signalleitungen angesteuert. Die über eine Druckluftzufuhr 14 gespeisten Vorsteuerventile V9 und V10 wiederum steuern über gestrichelt gezeichnete Druckluftleitungen pneumatisch getriebene Flüssigkeitsventile V1 bis V6 an, die ihrerseits wiederum die Flüssigkeitsströme in der erfindungsgemäßen Retardationsanlage steuern.

In einem Leitungsabschnitt vor der Druckluft-Membranpumpe 1 ist außerdem ein Flußmengenmeßgerät 13 vorgesehen, daß zur Bestimmung der aktuellen Flüssigkeitsströme verwendet werden kann. Der Antrieb der Druckluft-Membranpumpe 1 erfolgt ebenfalls mit Hilfe der Druckluftzufuhr 14, wobei ein weiteres Vorsteuerventil V8 zur Steuerung der Pumpen-Druckluft vorgesehen sein kann.

Die Betriebszyklen der in Fig. 1 gezeigten erfindungsgemäßen Retardationsanlage entsprechen im wesentlichen denen der in Fig. 2 gezeigten Anlage nach dem Stand der Technik: Aus einem beispielsweise mit Eloxalbad gefüllten Behälter 3 wird über einen Leitungsabschnitt 5 bei geöffnetem Flüssigkeitsventil V1 über die Druckluft-Membranpumpe 1 Säure-Salz-Lösung durch das geöffnete Flüssigkeitsventil V2 in einen Leitungsabschnitt 12 und von da aus im Aufstrom durch einen mit Adsorbermaterial gefüllten Harzbehälter 2 gepumpt, wobei die beiden Flüssigkeitsventile V3 und V4 geschlossen sind. Die entsäuerte Lösung verläßt den Harzbehälter 2 an seinem oberen Ende durch den Leitungsabschnitt 9 und fließt durch das geöffnete Flüssigkeitsventil V5 und einen Leitungsabschnitt 8 einer in der Zeichnung nicht dargestellten Abwasseranlage zu.

Bei Erreichen des kritischen Hubzahlwertes und damit der kritischen Volumenmenge an Säure-Salz-Lösung, die zu einem Säuredurchbruch führen würde, wird aufgrund der von der Hubzähleinrichtung 10 an die Steuereinrichtung 11 abgegebenen Impulse über die entsprechende Steuerleitung des Vorsteuerventil V9 in einen solchen Betriebszustand gebracht, daß die von ihm bedienten Flüssigkeitsventile V1, V2 und V5 geschlossen werden. Gleichzeitig wird das Vorsteuerventil V10 in einen solchen Betriebszustand gebracht, daß die von ihm bedienten Flüssigkeitsventile V6, V3 und V4 geöffnet werden. Dadurch wird eine weitere Förderung von Säure-Salz-Lösung aus dem Behälter 3 unterbrochen, während nunmehr aus einem Regeneriermittelbehälter 4 eine Regenerierlösung, in der Regel über eine Zuführung 15 zugeflossenes vollentsalztes Wasser, über einen Leitungsabschnitt 7 und das geöffnete Flüssigkeitsventil V6 mit Hilfe der Druckluft-Membranpumpe 1, die nach wie vor in der gleichen Richtung pumpt, durch das geöffnete Ventil V4 in den Leitungsabschnitt 9 und von da aus im Abstrom durch den Harzbehälter 2 mit den nunmehr mit Säure gesättigten Adsorberkügelchen gepumpt wird.

Die von der Regenerierlösung dem Adsorbermaterial entnommene Säure wird über den Leitungsabschnitt 12 und das nunmehr geöffnete Flüssigkeitsventil V3 einem Leitungsabschnitt 6 und über diesen dem Behälter 3 mit dem Eloxalbad zugeführt.

Bei Erreichen des zweiten kritischen Hubwertes, der eine bevorstehende Verdünnung des Eloxalbades ankündigt, wird über die Hubzähleinrichtung 10 und die Steuereinrichtung 11 das Vorsteuerventil V10 in einen Betriebszustand gebracht, bei dem die von ihm bedienten Flüssigkeitsventile V6, V3 und V4 geschlossen sind, während das Vorsteuerventil V9 in einen Betriebszustand gebracht wird, bei dem die Flüssigkeitsventile V1, V2 und V5 geöffnet sind, so daß wiederum Säure-Salz-Lösung aus dem Behälter 3 im Aufstrom durch den Harzbehälter 2 geleitet wird, in dem die Adsorberharzkügelchen nunmehr wieder zur Säureaufnahme geschärft sind.

Die Hubzähleinrichtung 10, die ja zwei verschiedene kritische Hubwerte an die Steuereinrichtung 11 weitergeben muß, kann prinzipiell aus zwei alternativ betriebenen, vorzugsweise elektromechanischen Zählwerken aufgebaut sein, die sich selbst nach einer vorgebbaren, nämlich der jeweils kritischen Hubzahl ausschalten und das jeweils andere Zählwerk einschalten. Bei einer anderen Ausführungsform umfaßt die Hubzähleinrichtung 10 ein vorzugsweise elektronisches Zählwerk mit mindestens zwei abspeicherbaren diskreten Hubwerten, so daß ebenfalls wieder die beiden kritischen Hubwerte an die Steuereinrichtung 11 weitergegeben werden können.

Eine besondere Absicherung der Druckluft-Membranpumpe 1 gegen Heißlaufen oder Überdruckerzeugung bei einem Störfall, der beispielsweise durch Druckluftausfall, Leitungsverstopfung aufgrund von Verschmutzungen oder Fehlstellung von Ventilen hervorgerufen werden könnte, ist bei der erfindungsgemäßen Retardationsanlage nicht erforderlich. Bei geschlossenen Ventilen erzeugt die Druckluft-Membranpumpe 1 nämlich keinen weiteren Überdruck sondern bleibt einfach stehen; auch ein Heißlaufen der Druckluft-Membranpumpe 1 kann nicht erfolgen.

## Patentansprüche

1. Retardationsanlage zur Säure-Salz-Trennung mit einem Behälter, der säureaufnehmendes Adsorbermaterial, insbesondere Adsorberharz enthält, und eine Zuleitung für wässrige Säure-Salz-Lösung, beispielsweise aus einem Eloxalbad, eine weitere Zuleitung für eine Regenerierlösung zum Regenerieren des Adsorbermaterials, insbesondere vollentsalztes (VE) Wasser, im Gegenstrom zur Säure-Salz-Lösung, sowie eine Ableitung für behandelte Säure-Salz-Lösung, die das Adsorbermaterial passiert hat, aufweist, und mit mindestens einer Pumpe zur Förderung der Säure-Salz-Lösung und/oder der Regenerierlösung, dadurch gekennzeichnet, daß genau eine Pumpe vorgesehen ist, daß die Pumpe als Druckluft-Membranpumpe (1) ausgeführt ist und eine Einrichtung (10) zur Hubzählung aufweist, und daß eine Einrichtung (11) zur Steuerung der Volumenströme von Säure-Salz-Lösung bzw. Regenerierlösung aufgrund der Hubzahl der Druckluft-Membranpumpe vorgesehen ist.

2. Retardationsanlage nach Anspruch 1, dadurch gekennzeichnet, daß die Einrichtung (10) zur Hubzählung zwei alternativ betriebene, vorzugsweise elektromechanische Zählwerke umfaßt, die sich selbst nach einer vorgebbaren Hubzahl ausschalten und das jeweils andere Zählwerk einschalten.

3. Retardationsanlage nach Anspruch 1, dadurch gekennzeichnet, daß die Einrichtung (10) zur Hubzählung ein vorzugsweise elektronisches Zählwerk mit mindestens zwei abspeicherbaren diskreten Hubwerten umfaßt.

4. Retardationsanlage nach einem der vorhergehenden Ansprüche, dadurch gekennzeichnet, daß die Einrichtung zur Steuerung der Volumenströme mehrere ansteuerbare Flüssigkeitsventile (V1 bis V6) sowie zwei Vorsteuerventile (V9, V10) zur Ansteuerung aller Flüssigkeitsventile (V1 bis V6) umfaßt.

5. Verfahren zum Betrieb einer Retardationsanlage nach einem der vorhergehenden Ansprüche, dadurch gekennzeichnet, daß eine Mengenzumessung der durch das Adsorbermaterial geleiteten Volumenströme von Säure-Salz-Lösung bzw. Regenerierlösung aufgrund einer Zählung der Hübe der Druckluft-Membranpumpe (1) erfolgt.

6. Verfahren nach Anspruch 5, dadurch gekennzeichnet, daß die zur Steuerung des Volumenstroms von Säure-Salz-Lösung bzw. des Volumenstroms von Regenerierlösung durch das Adsorbermaterial erforderlichen Flüssigkeitsventile (V1 bis V6) durch jeweils ein einziges Vorsteuerventil (V9 bzw. V10) angesteuert werden.
